# EUROPÄISCHE PATENTSCHRIFT

(11) **EP 2 219 502 B1**
(45) Veröffentlichungstag und Bekanntmachung des Hinweises auf die Patenterteilung: **12.01.2011**
(21) Anmeldenummer: 08801664.7
(22) Anmeldetag: 21.08.2008
(51) Int. Cl.: A47J 31/44

(54) **GETRÄNKEBEREITER MIT EINEM MILCHBEHÄLTER**
BEVERAGE-MAKING MACHINE WITH MILK CONTAINER
SYSTÈME DE PRÉPARATION DE BOISSONS COMPRENANT UN RÉSERVOIR À LAIT

(30) Priorität: 24.08.2007 DE 102007040306
(43) Veröffentlichungstag der Anmeldung: 25.08.2010
(73) Patentinhaber: Miele & Cie. KG, 33332 Gütersloh (DE); Eugster/Frismag AG, 8580 Amriswil (CH)
(72) Erfinder: GIEZENDANNER, Stefan, CH-9054 Haslen (CH); NATTKEMPER, Jörg, 59065 Hamm (DE)
(86) Internationale Anmeldenummer: PCT/EP2008/006890
(87) Internationale Veröffentlichungsnummer: WO 2009/027051

(56) Entgegenhaltungen:
- CH-A5- 685 597
- DE-A1-102004 010 452
- US-A- 6 099 878

## Beschreibung

Die Erfindung betrifft einen Getränkebereiter zur Zubereitung von Getränken mit Milch und/oder aus Milch, insbesondere Kaffeeautomat, mit einem Behälter für die Milch, die für die Zubereitung der Getränke verwendet wird.

Ein derartiger Getränkebereiter ist aus der CH-A-685597 bekannt.
Der bekannte Getränkebereiter ermöglicht die Zubereitung von Milch auf unterschiedliche Art und Weise und ist dazu mit zwei voneinander verschiedenen Milchleistungen ausgebildet, die an voneinander verschiedenen Positionen an den Milchbehälter des Gerätes angeschlossen sind.

Aus den Druckschriften mit den Veröffentlichungsnummern DE 10 2005 048 164 A1 und EP 1 483 991 B1 sind weitere Getränkebereiter mit Milchbehältern bekannt.

Bei aus dem Stand der Technik bekannten Getränkebereitern wird die Milch entweder in einer Verkaufsverpackung neben den Getränkebereitern gestellt und eine Milchleitung in die Verkaufsverpackung gelegt. Die Verkaufsverpackung bildet dann einen Milchbehälter, der jedoch nicht Teil des Getränkebereiters ist. Andere Getränkebereiter weisen einen eigenen Milchbehälter auf, der ebenfalls manuell mit einer Milchleitung verbunden werden muss. Gemein ist den bekannten Getränkebereitern, dass lediglich eine Milchleitung vorgesehen ist. Diese Milchleitung wird verwendet, um Milch zur Herstellung von Getränken aus Milch oder Milch enthaltenden Getränken anzusaugen. In dem Gerät des Milchbereiters wird dann aus der Milch je nach dem gewählten Getränk heiße Milch, Milchschaum oder ähnliches hergestellt.

Je nach Form, in welcher die Milch für die Zubereitung des Getränks benötigt wird, werden insbesondere unterschiedliche Mengen der Milch benötigt. Je nach Verarbeitung der Milch in dem Gerät muss die Milch zu unterschiedlichen Zubereitungsmitteln des Geräts geleitet werden. Dabei sind mitunter längere Transportwege der Milch notwendig.

Sowohl die Förderung der für das Getränk notwendigen Milchmenge als auch die Leitung der Milch zu den die Milch verarbeitenden Zubereitungsmitteln des Geräts ist bei den Geräten nach dem Stand der Technik nicht befriedigend gelöst.

Hier setzt die vorliegende Erfindung an.

Der Erfindung liegt die Aufgabe zugrunde, einen Getränkebereiter der eingangs genannten Art so zu verbessern, dass eine zielgerichtete Leitung der Milch zu den die milchverarbeitenden Zubereitungsmittel möglich und zugleich eine mengenmäßige Steuerung der Milch möglich und sichergestellt ist.

Diese Aufgabe wird erfindungsgemäß dadurch gelöst, dass der Getränkebereiter mindestens zwei zum Ansaugen von Milch aus dem Milchbehälter geeignete und eingerichtete Milchleitungen aufweist, die über ihre Endteile miteinander verbunden sind. Dadurch, dass zwei Milchleitungen vorgesehen sind, ist eine zielgerichtete Leitung der Milch zu den die milchverarbeitenden Zubereitungsmittel des Geräts möglich. Über die Gestaltung der Milchleitungen kann ferner auch die Menge der aus den Milchbehältern anzusaugenden Milch bestimmt werden. Die Milchbehältern sind daher unterschiedlich ausgestaltet. Der Getränkebereiter ist daher dazu eingerichtet und geeignet, die über die unterschiedlichen Milchleitungen angesaugte Milch auf unterschiedliche Art und Weise mit einem oder mehreren Zubereitungsmitteln zuzubereiten.

Die Milchleitungen weisen einen Schlauch und/oder ein Rohr auf. Der Schlauch und/oder das Rohr können von Milchleitung zu Milchleitung einen unterschiedlich lichten Querschnitt haben.

An den freien Enden der Milchleitungen ist jeweils ein Endteil vorgesehen. Die Endteile zumindest zweier Milchleitungen sind miteinander verbunden .

Gemäß der Erfindung kann jedem Schlauch oder jedem Rohr ein Endteil zugeordnet sein, so dass je ein Endteil einerseits und je ein Schlauch oder ein Rohr andererseits ein Paar bilden. Diese Paare können geeignet und eingerichtet sein, eine lösbare Verbindung des Endteils eines Paares nur mit Schlauch oder dem Rohr des gleichen Paares zu ermöglichen, so dass das Endteil nicht mit einem anderen Schlauch oder einem anderen Rohr einer anderen Milchleitung des Getränkebereiters verbindbar ist.

Bei einem erfindungsgemäßen Getränkebereiter können die Endteile und die Schläuche beziehungsweise Rohre Verbindungsstrukturen zum Verbinden zu einem Paar aufweisen. Die Verbindungsstrukturen eines Paares aus Endteilen und Schlauch und/oder Rohr ermöglichen eine lösbare Verbindung des Endteils des Paares nur mit dem Schlauch oder dem Rohr des gleichen Paares.

Die zumindest zwei miteinander verbundenen Endteile und die zugeordneten Schläuche und/oder Rohre sind vorteilhaft so ausgestaltet, dass nur eine lösbare Verbindung des Endteils eines Paares nur mit dem Schlauch und/oder dem Rohr des gleichen Paares möglich ist. Die Ausgestaltung kann beispielsweise dahingehend gewählt sein, dass die Rohre der beiden unterschiedlichen Milchleitungen eine unterschiedliche Länge und die fest miteinander verbundenen Endteile ebenfalls eine unterschiedliche Länge haben.

Die Verbindungsstrukturen der zumindest zwei miteinander verbundenen Endteile und die Verbindungsstrukturen der zumindest zwei Schläuche und/oder Rohre können alternativ oder zusätzlich so angeordnet sein, dass nur eine lösbare Verbindung des Endteils eines Paares nur mit dem Schlauch oder dem Rohr des gleichen Paares möglich ist.

Die Schläuche oder Rohre eines der Milchleitungen eines erfindungsgemäßen Getränkebereiters können gleich oder unterschiedlich lang sein.

In den Endteilen der Milchleitungen sind vorzugsweise Ansaugöffnungen vorgesehen. Diese Ansaugöffnungen können einen unterschiedlichen Durchmesser beziehungsweise einen unterschiedlichen lichten Querschnitt haben.

Gemäß der Erfindung kann eines der Zubereitungsmittel des Geräts zum Erhitzen von Milch geeignet und eingerichtet sein. Ein anderes Zubereitungsmittel kann dagegen zum Erzeugen von Milchschaum geeignet und eingerichtet sein.

Der Milchbereiter eines erfindungsgemäßen Getränkebereiters kann einen Deckel aufweisen und in dem Deckel können zumindest Abschnitte der Milchleitungen vorgesehen sein.

Ein erfindungsgemäßes Beispiel für einen Getränkebereiter zur Zubereitung von Getränken mit oder aus Milch, nämlich für einen Kaffeeautomaten, ist anhand der Figuren näher erläutert. Es zeigt:

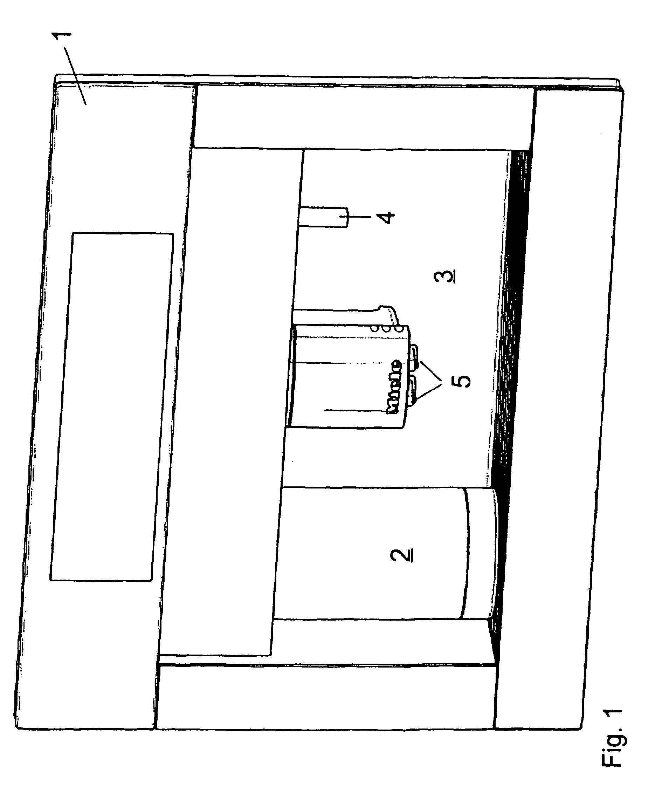

- Fig. 1: eine Frontansicht einer Tür des erfindungsgemäßen Getränkebereiters,
- Fig. 2: eine Rückansicht der Tür des erfindungsgemäßen Getränkebereiters,
- Fig. 3: eine perspektivische Darstellung eines Milchbehälters des Getränkebereiters,
- Fig. 4: eine Explosionsdarstellung des Milchbehälters,
- Fig. 5: eine perspektivische Ansicht eines Deckels des Milchbehälters,
- Fig. 6: eine Explosionsdarstellung des Deckels,
- Fig. 7: je einen Abschnitt von zwei Milchleitungen des Getränkebereiters,
- Fig. 8: die Enden der Milchleitungen in einer Explosionsdarstellung,
- Fig. 9: eine perspektivische Ansicht des in eine Aufnahmeausnehmung eingesetzten Milchbehälters unter Vernachlässigung wesentlicher Teile des Deckels des Milchbehälters,
- Fig. 10: eine Darstellung entsprechend Fig. 9 jedoch mit nicht gekuppelten Milchleitungen und Sensorstäben,
- Fig. 11: eine weitere Darstellung entsprechend Fig. 9, jedoch mit gekuppelten Milchleitungen und Sensorstäben.

Der erfindungsgemäße Getränkebereiter umfasst ein Gerät, in welchem die Getränke zubereitet werden, und das als Standgerät oder als Einbaugerät ausgestaltet sein kann. Das Gerät weist ein Gehäuse auf, in dem verschiedene Komponenten des Geräts untergebracht sind. Das Gehäuse umfasst eine Tür 1, die auf der Frontseite des Geräts vorgesehen ist, und die zu Wartungszwecken und zum Zwecke des Nachfüllens von verschiedenen Getränkezutaten geöffnet werden kann. Weitere Teile des Gehäuses oder in dem Gehäuse angeordneter Komponenten des Geräts sind in den Figuren nicht dargestellt.

Neben dem Gerät umfasst der Getränkebereiter einen Milchbehälter 2, der während des Betriebs des Getränkebereiters in das Gerät beziehungsweise in die Tür 1 des Geräts eingesetzt ist. Aus dem Milchbehälter 2 wird, sofern ein Getränk aus Milch oder ein Getränk das Milch enthält zubereitet werden soll, Milch entnommen.

Die Getränke werden in einem Ausgabebereich 3 abgezapft, wofür der Getränkebereiter verschiedene Ausgabedüsen 4, 5 aufweist. Der Ausgabebereich 3 ist in einer Nische der Tür vorgesehen, in welche die verschiedenen Ausgabedüsen 4, 5 deckenseitig einmünden.

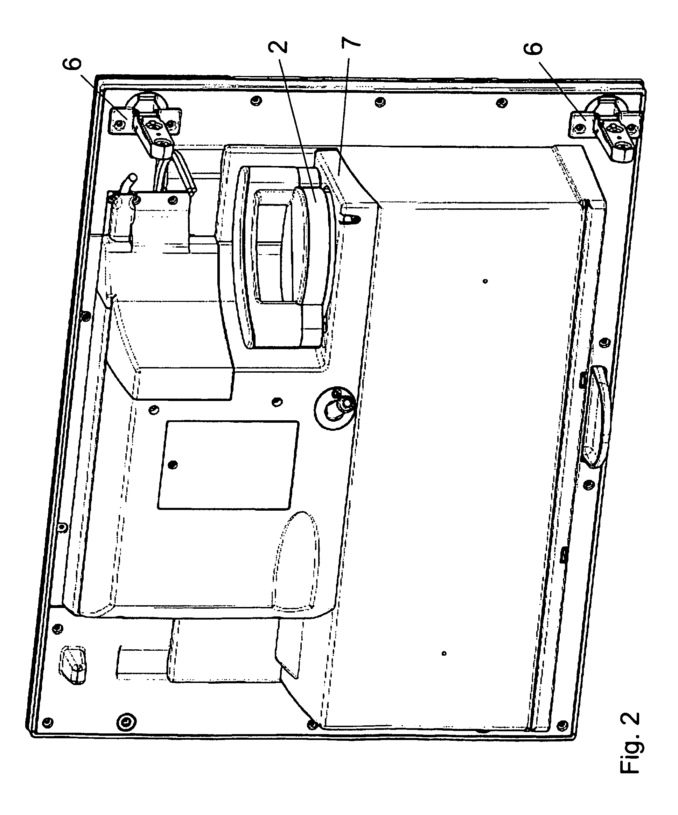

Die Tür 1 ist über Scharniere 6 mit dem übrigen Gehäuse verbunden (Fig. 2).

Auf der Innenseite der Tür ist ein Aufnahmeteil 7 vorgesehen, in welchem eine Aufnahmeausnehmung 74 vorgesehen ist. Diese Aufnahmeausnehmung 74 ist als Durchgangsloch ausgestaltet und mündet deckenseitig in der Nische des Ausgabebereichs 3 auf der Frontseite der Tür 1.

In die Aufnahmeausnehmung ist der Milchbehälter 2 eingesetzt. Der Milchbehälter 2 durchgreift die Aufnahmeausnehmung 74 und ragt in die Nische des Ausgabebereichs 3 hinein. Ein Teil des Milchbehälters 2 ist daher von außen erkennbar.

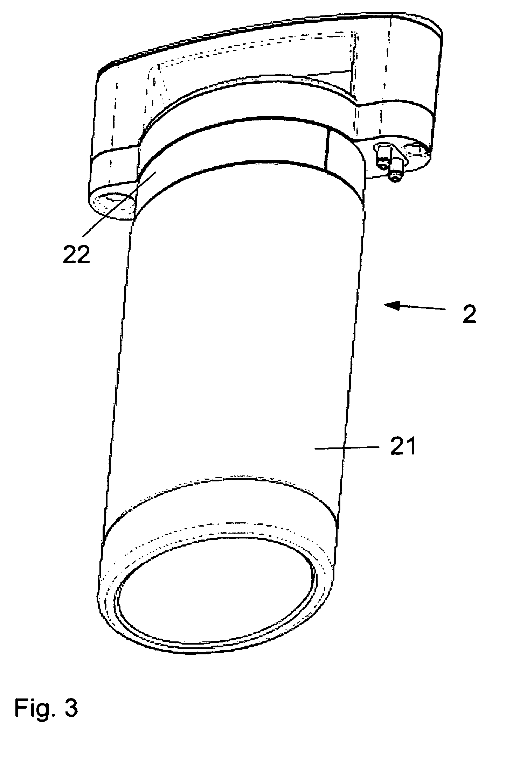

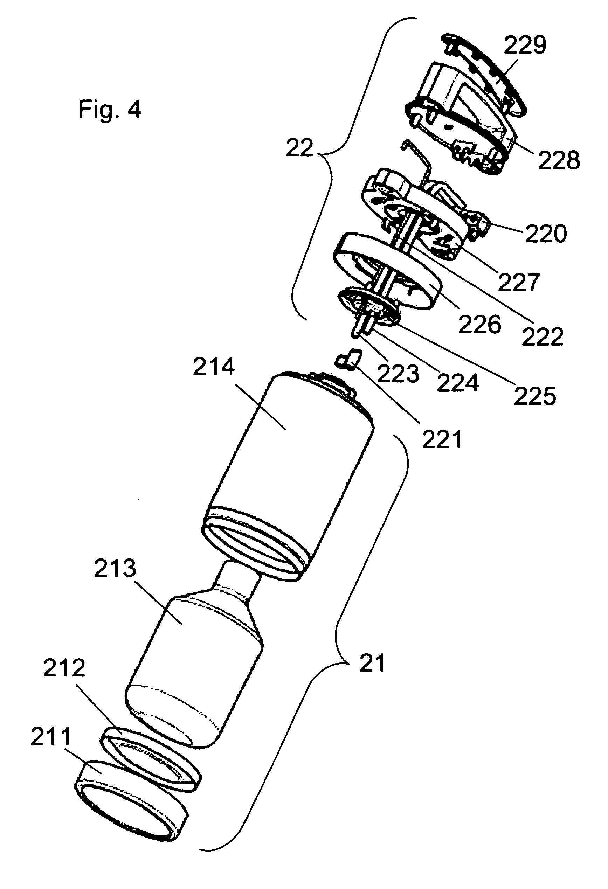

Der Milchbehälter (Fig. 3 und 4) umfasst ein Isoliergefäß 21 und einen Deckel 22. Das Isoliergefäß 21 ist aus einem ersten Bodenteil 211, einem zweiten Bodenteil 212, einem Innengefäß 213 und einem Außengefäß 214 zusammengesetzt. Das erste Bodenteil 211 und das zweite Bodenteil 212 sind ringförmig ausgebildet. Das zweite Bodenteil 212 kann in das erste Bodenteil 211 eingesetzt werden. Das Innengefäß 213 ruht auf dem zweiten Bodenteil, während das Außengefäß 214 auf dem Fachmann bekannte Weise mit dem ersten Bogenteil 211 verbunden ist. Das Außengehäuse 214 haust das Innengehäuse 213 ein, so dass das Innengehäuse 213 durch das Außengehäuse 214 gegen Beschädigungen geschützt ist.

Bei abgenommenem Deckel 22 kann in das Isoliergefäß 21 Milch eingefüllt werden. Nach dem Einfüllen wird dann das Isoliergefäß 21 mit dem Deckel 22 verschlossen, wozu ein Verschlussmechanismus genutzt wird, der nicht näher beschrieben wird.

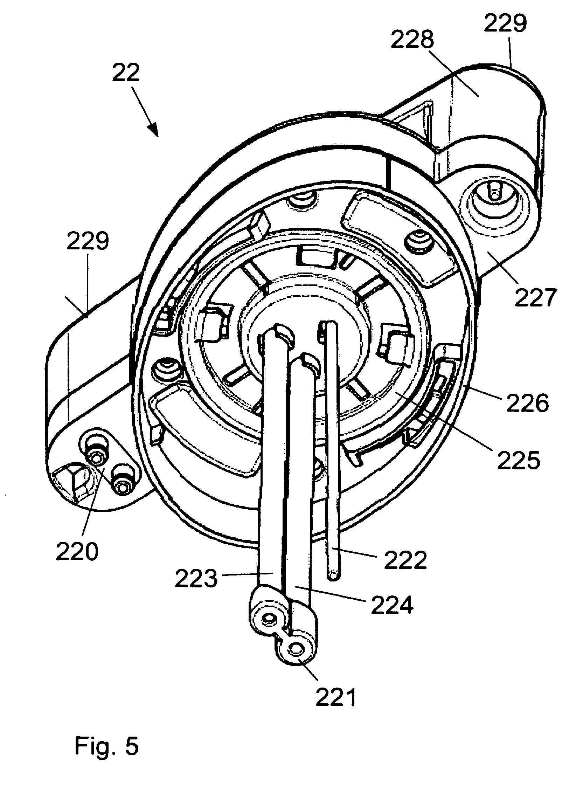

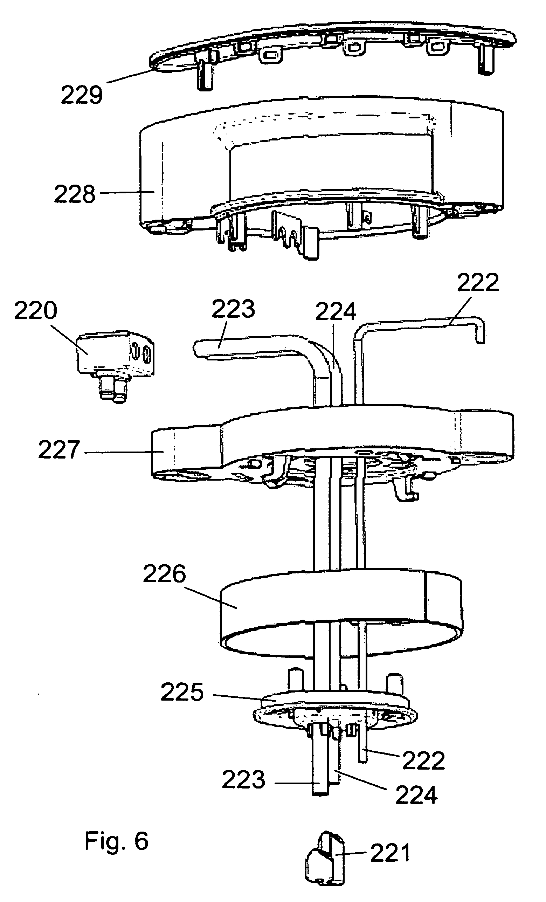

Der Deckel (Fig. 4, Fig. 5 und Fig. 6) umfasst als Teile des Mechanismus zur Verbindung mit dem Isoliergefäß 21 ein erstes Verriegelungsteil 225, ein zweites Verriegelungsteil 226 und ein drittes Verriegelungsteil 227, die zum Teil gegeneinander schwenkbar auf nicht näher erläuterte Art und Weise miteinander verbunden sind. Auf dem dritten Verriegelungsteil 227 ist ein Bügelteil 228 aufgesetzt, das mit einem Abdeckungsteil 229 verbunden ist. An dem Bügelteil 228 ist ein Handgriff ausgebildet, an welchem der Milchbehälter 2 zum Transport ergriffen werden kann.

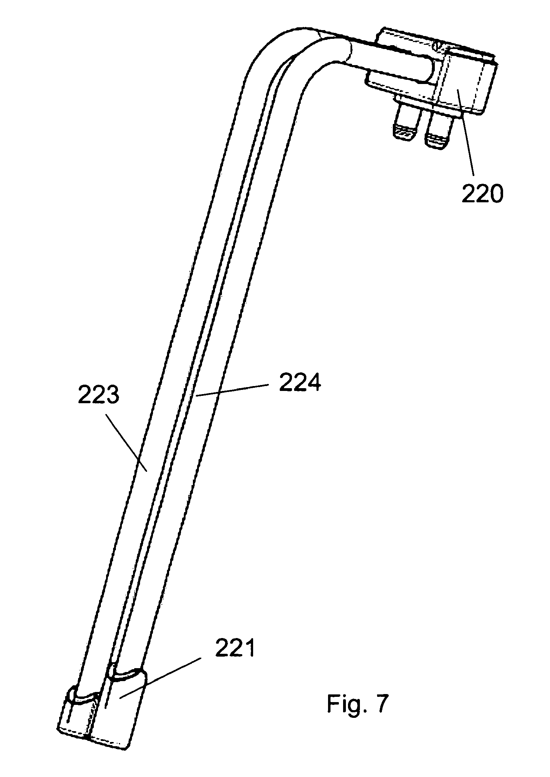

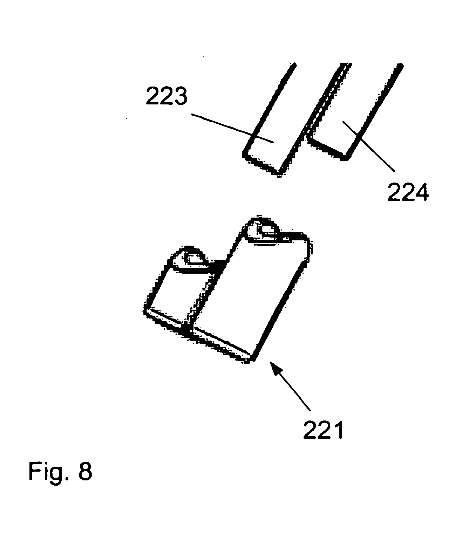

Durch das erste Verriegelungsteil 225, das zweite Verriegelungsteil 226 und das dritte Verriegelungsteil 227 ist jeweils ein Abschnitt 220, 221, 223, 224 von zwei Milchleitungen hindurchgeführt. Über die Milchleitungen kann dem Milchbehälter 2 Milch entnommen und dem Gerät zugeführt werden. Die Abschnitte 220, 221, 223, 224 der Milchleitungen (Fig. 7, Fig. 8) weisen zwei L-förmig gebogene Rohre 223, 224, zwei Endteile 221 und ein Kupplungsmittel 220 auf. Die Endteile 221 sind miteinander fest verbunden und als ein Kunststoffspritzteil hergestellt. Die Endteile 221 sind an den Enden der längeren Schenkel der Rohre 223, 224 angebracht.

Die längeren Schenkel der Rohre 223, 224 sind ungleich lang. Der längere Schenkel des ersten Rohres 223 ist nämlich länger als der längere Schenkel des zweiten Rohres 224.

Die Endteile 221 sind komplementär zu den Enden der Rohre 223, 224 ausgebildet. Das Endteil, welches dem ersten Rohr 223 zugeordnet ist, ist kürzer als das Endteil, welches dem zweiten Rohr 224 zugeordnet ist. Damit ist sichergestellt, dass die beiden Rohre 223, 224 mit dem jeweils ihnen zugeordneten Endteil 221 verbunden sind. Dieses ist von Bedeutung, da die Ansaugöffnungen, welche in den Endteilen 221 vorgesehen sind unterschiedlich ausgebildet sind. Die Ansaugöffnung des einen Endteils hat einen größeren Querschnitt als die Ansaugöffnung des anderen Endteils. Der Querschnitt der Ansaugöffnung hat einen Einfluss auf den Volumenstrom, der über die Abschnitte 220, 221, 223, 224 der Milchleitungen gefördert werden kann. Je nach dem wie die Milch in dem Gerät verwendet werden soll, ist eine größere Milchmenge notwendig. Die Menge der aus dem Milchbehälter 2 angesaugten Milch wird somit zum Teil auch über die Wahl des Querschnitts der Ansaugöffnung in den Endteilen 221 bestimmt.

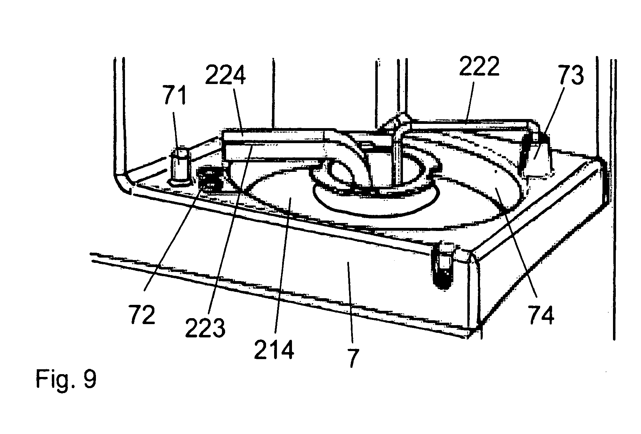

Das Kupplungsstück 220 dient der Verbindung der Abschnitte 220, 221, 223, 224 der Milchleitungen im Deckel 22 mit weiterführenden Abschnitten der Milchleitungen im Gerät. Von diesen weiterführenden Abschnitten ist lediglich ein zum Kupplungsmittel 220 komplementäres Kupplungsmittel 72 dargestellt (Fig. 9 bis 11).

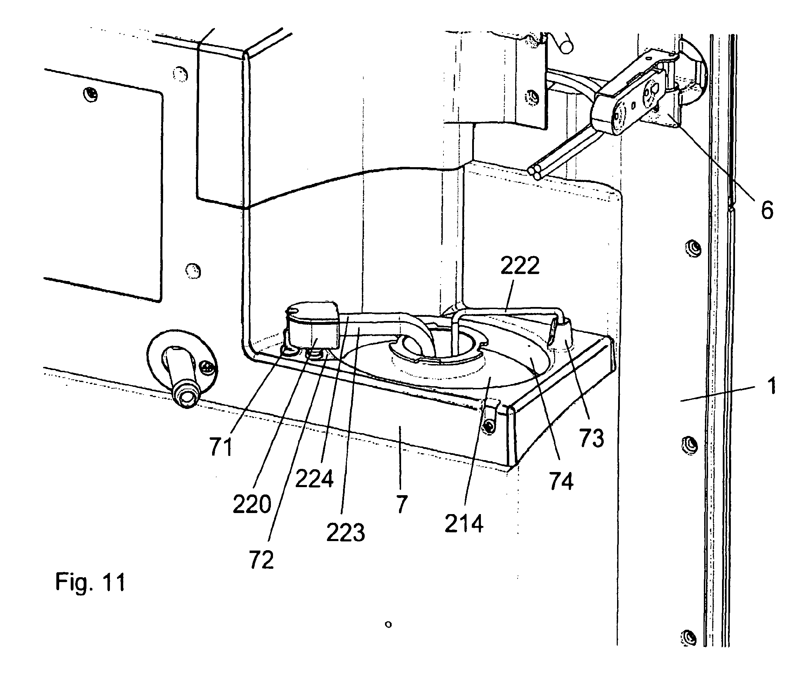

Im Deckel 22 des Milchbehälters 2 ist ein Sensorstab 222 eines kapazitiven Füllstandssensors angeordnet (Fig. 11). Der Sensorstab 222 ist ebenfalls L-förmig gebogen, wobei der längere Schenkel parallel zu den längeren Schenkeln der Rohre 223, 224 in das Isoliergefäß 21 hineinragt. Der kürzere Schenkel liegt mit den kürzeren Schenkeln der Rohre 223, 224 in etwa in einer Ebene, läuft jedoch in eine entgegengesetzte Richtung. Das Ende des kürzeren Schenkels des Sensorstabes 222 ist rechtwinklig nach unten abgekröpft. Das abgekröpfte Ende hat die Form eines Bolzens und dieser dient der Verbindung des Sensorstabes 222 mit einer nicht dargestellten Sensorleitung im Gerät, wozu am Aufnahmeteil 7 des Geräts eine Buchse 73 zur Kupplung des Sensorstabs 222 und der Sensorleitung vorgesehen ist. Die Buchse 73 liegt auf der gegenüberliegenden Seite des geräteseitigen Kupplungsmittels 72 der Milchleitungen. Dadurch ist eine Entkopplung der elektrischen Signale, die über die Sensorleitungen beziehungsweise den Sensorstab 222 geführt werden, und der Flüssigkeit, die durch die Milchleitungen geführt wird, gewährleistet.

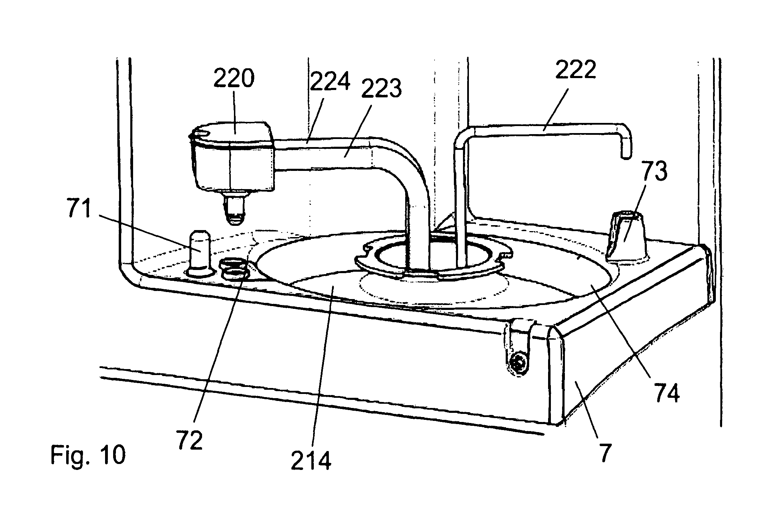

Im Bereich des geräteseitigen Kupplungsmittels 72 ist ein Positionierdorn 71 vorgesehen, der in eine komplementäre Positionierbuchse im Deckel 22 eingreift. Diese Positionierbuchse ist zum Teil durch das deckelseitige Kupplungsmittel 220 gebildet (Fig. 10, Fig. 11).

Die Aufnahmeausnehmung 74 für den Milchbehälter 2 im Aufnahmeteil 7 der Tür 1 ist so ausgerichtet, dass der Milchbehälter 2 aufgrund seiner Schwerkraft in der Aufnahmeausnehmung 74 gehalten wird. Zugleich gewährleistet die Schwerkraft, dass die Abschnitte 220, 221, 223 und 224 der Milchleitungen im Milchbehälter 2 und der Sensorstab 222 automatisch mit den Milchleitungen beziehungsweise Sensorleitungen im Gerät gekoppelt wird. Das Einsetzen des Milchbehälters 2 ist aufgrund seiner ovalen Querschnittsform des Außengehäuses 214 und des dementsprechenden lichten Querschnitts der Aufnahmeausnehmung 74 und aufgrund des Positionierdorns 71 und der Positionierbuchse immer nur so möglich, da ein korrektes Einsetzen des Milchbehälters 2 in die Aufnahmeausnehmung 74 gewährleistet ist. Sofern das untere Ende des Milchbehälters 2 in die Aufnahmeausnehmung 74 mit der richtigen Orientierung eingesetzt ist, rutschen zur Verbindung der Abschnitte der Milcheleitungen Stutzen an dem Kupplungsmittel 220 automatisch in Buchsen des Kupplungsmittels 72 einerseits und zur Verbindung des Sensorstabs 222 mit der Sensorleitung der Bolzen des Sensorstabs 222 in die Buchse 73 andererseits.

Zumindest eines der Kupplungsmittel 220, 72 ist weichelastisch ausgeführt, vorzugsweise die Stutzen 220 des milchbehälterseitigen Kupplungsmittels 220, so dass eine dichte Verbindung der Abschnitte der Milchleitungen möglich ist, über welche die Milch aus dem Milchbehälter 2 angesaugt werden kann.

Die Kupplungen zwischen den geräteseitigen und milchbehälterseitigen Abschnitten der Milchleitungen und dem Sensorstab 222 und der Buchse 73 werden somit ohne weitere Handgriffe beim Einsetzen des Milchbehälters 2 in die Aufnahmeausnehmung 74 hergestellt.

## Patentansprüche

1. Getränkebereiter zur Zubereitung von Getränken mit Milch und/oder aus Milch, insbesondere Kaffeeautomat, mit einem Behälter (2) für die Milch, die für die Zubereitung der Getränke verwendet wird, wobei der Getränkebereiter mindestens zwei unterschiedlich ausgebildete, zum Ansaugen von Milch aus dem Milchbehälter (2) geeignete und eingerichtete Milchleitungen (220, 221, 223, 224, 72) aufweist und wobei der Getränkebereiter geeignet und eingerichtet ist, die über die unterschiedlichen (220, 221, 223, 224, 72) Milchleitungen angesaugte Milch auf unterschiedliche Art und Weise mit einem oder mehreren Zubereitungsmitteln zuzubereiten, wobei die Milchleitungen (220, 221, 223, 224, 72) einen Schlauch oder ein Rohr (223, 224) und jeweils ein Endteil aufweisen, **dadurch gekennzeichnet, dass** die Endteile (221) der zumindest zwei Milchleitungen (220, 221, 223, 224, 72) miteinander verbunden sind.

2. Getränkebereiter nach Anspruch 1, **dadurch gekennzeichnet, dass** Paare aus einem Endteil einerseits und einem Schlauch oder einem Rohr (223, 224) andererseits geeignet und eingerichtet sind, eine lösbare Verbindung des Endteils eines Paares nur mit dem Schlauch oder dem Rohr (223, 224) des gleichen Paares zu ermöglichen.

3. Getränkebereiter nach Anspruch 2, **dadurch gekennzeichnet, dass** die Endteile (221) und die Schläuche oder Rohre (223, 224) Verbindungsstrukturen zum Verbinden zu einem Paar aufweisen.

4. Getränkebereiter nach Anspruch 3, **dadurch gekennzeichnet, dass** die Verbindungsstrukturen eines Paares aus Endteil und Schlauch oder Rohr eine lösbare Verbindung des Endteils des Paares nur mit dem Schlauch oder dem Rohr (223, 224) des gleichen Paares ermöglichen.

5. Getränkebereiter nach Anspruch 1 und 2, **dadurch gekennzeichnet, dass** die zumindest zwei miteinander verbundenen Endteile (221) und die Schläuche oder Rohre (223, 224) so ausgestaltet sind, dass nur eine lösbare Verbindung des Endteils eines Paares nur mit dem Schlauch oder dem Rohr (223, 224) des gleichen Paares möglich ist.

6. Getränkebereiter nach Anspruch 5, **dadurch gekennzeichnet, dass** Verbindungsstrukturen der zumindest zwei mit einander verbundenen Endteile (221) und Verbindungsstrukturen der zumindest zwei Schläuche und/oder Rohre so angeordnet sind, dass nur eine lösbare Verbindung des Endteils eines Paares nur mit dem Schlauch oder dem Rohr (223, 224) des gleichen Paares möglich ist.

7. Getränkebereiter nach Anspruch 6, **dadurch gekennzeichnet, dass** die zumindest zwei Schläuche und Rohre (223, 224) ungleich lang sind.

8. Getränkebereiter nach einem der Ansprüche 1 bis 7, **dadurch gekennzeichnet, dass** die Endteile (221) Ansaugöffnungen der Milchleitungen (220, 221, 223, 224, 72) aufweisen.

9. Getränkebereiter nach Anspruch 8, **dadurch gekennzeichnet, dass** die Ansaugöffnungen einen unterschiedlichen Durchmesser aufweisen.

10. Getränkebereiter nach einem der Ansprüche 1 bis 9, **dadurch gekennzeichnet, dass** zumindest ein Zubereitungsmittel zum Erhitzen von Milch geeignet und eingerichtet ist.

11. Getränkebereiter nach einem der Ansprüche 1 bis 10, **dadurch gekennzeichnet, dass** zumindest ein Zubereitungsmittel zum Erzeugen von Milchschaum geeignet und eingerichtet ist.

12. Getränkebereiter nach einem der Ansprüche 1 bis 11, **dadurch gekennzeichnet, dass** der Milchbehälter einen Deckel aufweist und dass der Deckel (21) zumindest Abschnitte der Milchleitungen (220, 221, 223, 224) aufweist.

## Claims

1. Beverage preparation means for preparing beverages containing milk and/or made of milk, in particular a coffee machine, comprising a container (2) for the milk used for preparing the beverages, the beverage preparation means comprising at least two milk lines (220, 221, 223, 224, 72), formed differently from one another, which are adapted and set up to suck in milk from the milk container (2) and the beverage preparation means being adapted and set up to prepare the milk sucked in via the different (220, 221, 223, 224, 72) milk lines in a variety of ways using one or more preparation means, the milk lines (220, 221, 223, 224, 72) comprising a hose or a tube (223, 224) and a respective end part, **characterised in that** the end parts (221) of the at least two milk lines (220, 221, 223, 224, 72) are interconnected.

2. Beverage preparation means according to claim 1, **characterised in that** pairs composed of an end part on the one hand and a hose or a tube (223, 224) on the other hand are adapted and set up to make it possible to detachably connect the end part of one pair only to the hose or the tube (223, 224) of the same pair.

3. Beverage preparation means according to claim 2, **characterised in that** the end parts (221) and the hoses or tubes (223, 224) comprise connecting constructions for connecting to form a pair.

4. Beverage preparation means according to claim 3, **characterised in that** the connecting constructions of a pair composed of an end part and a hose or tube make it possible to detachably connect the end part of the pair only to the hose or the tube (223, 224) of the same pair.

5. Beverage preparation means according to claim 1 and claim 2, **characterised in that** the at least two interconnected end parts (221) and the hoses or tubes (223, 224) are configured in such a way that it is only possible to detachably connect the end part of one pair only to the hose or the tube (223, 224) of the same pair.

6. Beverage preparation means according to claim 5, **characterised in that** connection constructions of the at least two interconnected end parts (221) and connecting constructions of the at least two hoses and/or tubes are arranged in such a way that it is only possible to detachably connect the end part of one pair only to the hose or the tube (223, 224) of the same pair.

7. Beverage preparation means according to claim 6, **characterised in that** the at least two hoses and tubes (223, 224) are of unequal length.

8. Beverage preparation means according to any one of claims 1 to 7, **characterised in that** the end parts (221) comprise suction openings of the milk lines (220, 221, 223, 224, 72).

9. Beverage preparation means according to claim 8, **characterised in that** the suction openings have different diameters.

10. Beverage preparation means according to any one of claims 1 to 9, **characterised in that** at least one preparation means is adapted and set up to heat milk.

11. Beverage preparation means according to any one of claims 1 to 10, **characterised in that** at least one preparation means is adapted and set up to produce milk foam.

12. Beverage preparation means according to any one of claims 1 to 11, **characterised in that** the milk container comprises a lid and **in that** the lid (2) comprises at least portions of the milk lines (220, 221, 223, 224).

## Revendications

1. Système de préparation de boissons pour la préparation de boissons avec du lait et/ou à partir de lait, en particulier un distributeur de café, avec un réservoir (2) pour le lait qui est utilisé pour la préparation des boissons, le système de préparation de boissons présentant au moins deux conduites de lait (220, 221, 223, 224, 72) constituées de façon différente, appropriées et aménagées pour aspirer du lait à partir du réservoir de lait (2), et le système de préparation de boissons étant approprié et aménagé pour préparer de façon variée avec un ou plusieurs moyens de préparation le lait aspiré à travers les diverses conduites de lait (220, 221, 223, 224, 72), les conduites de lait (220, 221, 223, 224, 72) présentant un tuyau ou un tube (223, 224) et respectivement une partie d'extrémité, **caractérisé en ce que** les parties d'extrémité (221) des conduites de lait (220, 221, 223, 224, 72) au moins au nombre de deux sont raccordées mutuellement.

2. Système de préparation de boissons selon la revendication 1, **caractérisé en ce que** des paires composées d'une partie d'extrémité d'un côté et d'un tuyau ou d'un tube (223, 224) d'un autre côté sont appropriées et aménagées pour permettre un raccordement détachable de la partie d'extrémité d'une paire uniquement avec le tuyau ou le tube (223, 224) de la même paire.

3. Système de préparation de boissons selon la revendication 2, **caractérisé en ce que** les parties d'extrémité (221) et les tuyaux ou tubes (223, 224) présentent des structures de raccordement pour le raccordement à une paire.

4. Système de préparation de boissons selon la revendication 3, **caractérisé en ce que** les structures de raccordement d'une paire composée d'une partie d'extrémité ou d'un tuyau ou tube permettent un raccordement détachable de la partie d'extrémité de la paire uniquement avec le tuyau ou le tube (223, 224) de la même paire.

5. Système de préparation de boissons selon les revendications 1 et 2, **caractérisé en ce que** les parties d'extrémité (221), au moins au nombre de deux, raccordées entre elles et les tuyaux ou tubes (223, 224) sont constitués de sorte que seul un raccordement détachable de la partie d'extrémité d'une paire est possible seulement avec le tuyau ou le tube (223, 224) de la même paire.

6. Système de préparation de boissons selon la revendication 5, **caractérisé en ce que** des structures de raccordement des parties d'extrémité (221) au moins au nombre de deux raccordées entre elles et des structures de raccordement des tuyaux et/ou tubes au moins au nombre de deux sont disposées de sorte que seul un raccordement détachable de la partie d'extrémité d'une paire est possible seulement avec le tuyau ou le tube (223, 224) de la même paire.

7. Système de préparation de boissons selon la revendication 6, **caractérisé en ce que** les tuyaux et tubes (223, 224) au moins au nombre de deux sont de longueurs inégales.

8. Système de préparation de boissons selon l'une des revendications 1 à 7, **caractérisé en ce que** les parties d'extrémité (221) présentent des ouvertures d'aspiration des conduites de lait (220, 221, 223, 224, 72).

9. Système de préparation de boissons selon la revendication 8, **caractérisé en ce que** les ouvertures d'aspiration présentent un diamètre différent.

10. Système de préparation de boissons selon l'une des revendications 1 à 9, **caractérisé en ce qu'**au moins un moyen de préparation est approprié et aménagé pour chauffer du lait.

11. Système de préparation de boissons selon l'une des revendications 1 à 10, **caractérisé en ce qu'**au moins un moyen de préparation est approprié et aménagé pour produire de la mousse de lait.

12. Système de préparation de boissons selon l'une des revendications 1 à 11, **caractérisé en ce que** le réservoir de lait présente un couvercle, et **en ce que** le couvercle (21) présente au moins des tronçons des conduites de lait (220, 221, 223, 224).
